# EUROPEAN PATENT SPECIFICATION

(11) **EP 3 063 678 B1**
(45) Date of publication and mention of the grant of the patent: **11.03.2020**
(21) Application number: 14809977.3
(22) Date of filing: 28.10.2014
(51) Int. Cl.: H04L 29/06, H04L 29/08

(54) **NETWORK COMMUNICATION ARCHITECTURE AND METHOD FOR THE REPRODUCTION OF MULTIMEDIA CONTENT ITEMS**
NETZWERKKOMMUNIKATIONSARCHITEKTUR UND VERFAHREN ZUR WIEDERGABE VON MULTIMEDIA-INHALTSELEMENTEN
ARCHITECTURE DE COMMUNICATIONS PAR RÉSEAU ET PROCÉDÉ DE REPRODUCTION D'ARTICLES DE CONTENU MULTIMÉDIA

(30) Priority: 28.10.2013 IT UD20130139
(43) Date of publication of application: 07.09.2016
(73) Proprietor: Rotas Italia S.r.l., 31100 Treviso (IT)
(72) Inventor: CAMURRI, Antonio, I-16145 Genova (IT); CELANTE, Francesco, I-31100 Treviso (IT); MANCINI, Maurizio, I-16145 Genova (IT); VARNI, Giovanna, I-16121 Genova (IT); VOLPE, Gualtiero, I-16144 Genova (IT)
(74) Representative: Petraz, Davide Luigi
(86) International application number: PCT/IB2014/065666
(87) International publication number: WO 2015/063684

(56) References cited:
- EP-A1- 2 587 770
- FR-A1- 2 985 060
- US-A1- 2013 014 136
- GIOVANNA VARNI ET AL: "A System for Mobile Active Music Listening Based on Social Interaction and Embodiment", MOBILE NETWORKS AND APPLICATIONS, ACM, NEW YORK, NY, US, vol. 16, no. 3, 1 June 2011 (2011-06-01), pages 375-384, XP058003076, ISSN: 1383-469X, DOI: 10.1007/S11036-010-0256-4 cited in the application

## Description

### FIELD OF THE INVENTION

The present invention concerns a network communication architecture and a method to reproduce multimedia contents such as, merely by way of example, pre-recorded sounds and/or images.

The network communication architecture according to the present invention provides to use any portable electronic telecommunication device provided with a processor, such as for example a smartphone, a personal computer, for example portable, or notebook, a mini personal computer, a tablet, or other portable electronic telecommunication devices that will be developed in the future.

The method for reproducing the multimedia contents, when implemented in the network communication architecture, is able to provide a group of users with an innovative experience, which can be individual, group, or social, of actively listening to pre-recorded music, or actively viewing audiovisuals, such as for example videoclips, films or suchlike.

### BACKGROUND OF THE INVENTION

Various studies have been carried out in the field of interactive listening to pre-recorded music, which have led to the publication of at least the following scientific articles:
1) G. Varni, G. Volpe, A. Camurri (2010) - "A System for Real-Time Multimodal Analysis of Nonverbal Affective Social Interaction in User-Centric Media" - IEEE Transactions on Multimedia, Vol. 12, No. 6, pp. 576-590;
2) G. Volpe, A. Camurri (2011) - "A system for embodied social active listening to sound and music content" - ACM Journal on Computing and Cultural Heritage, Vol. 4, No. 1, pp. 2-23;
3) G. Varni, M. Mancini, G. Volpe, A. Camurri (2011) - "A system for mobile active music listening based on social interaction and embodiment" - ACM Mobile Networks and Applications Intl Journal (ACM MONET), Vol. 16, No. 3, pp. 375-384.

The application Sync'n'Move is also known, described in the scientific article by Giovanna Varni, Maurizio Mancini, Gualtiero Volpe, and Antonio Camurri entitled "Sync'n'Move: social interaction based on music and gesture".

Furthermore, from the Italian patent N° 1.378.053 an interactive multimedia application is known, for active listening to recorded music.

From Internet presentations, one of which can be found at the address URL:http://web.archive.org/web/20130117184516/http:developer.android.com/guide/topics/connectivity/ nfc/nfc.html, and entitled "NFC Basics | Android Developers" the possibility is also known of activating an application in an electronic device by reading an enabling support exploiting NFC techniques.

A method and a system are also known, from documents US-A-2008/0207128 and US-A-2011/0053504, to control the start of an application in a mobile device such as a mobile phone device. In particular, the application is started after the reading of an enabling support for example by means of NFC (Near Field Communication) techniques. Depending on the information present in the enabling support, the mobile phone device authorizes or does not authorize the activation of an application.

However, neither of the two documents US-A-2008/0207128 and US-A-2011/0053504 describes solutions in which the activation of the application entails the reproduction of multimedia contents.

Furthermore, these solutions do not actively involve the users in using the multimedia contents.

In the known solutions described in documents US-A-2008/0207128 and US-A-2011/0053504, moreover, each mobile phone device is a single entity, independent of the others, and the applications that are carried out by each of the mobile phone devices do not interact with those activated in other mobile devices.

Moreover, the mobile phone devices that include the solutions described in documents US-A-2008/0207128 and US-A-2011/0053504 are not able to acquire parameters regarding the emotional state or energy of a user who possesses the mobile device.

FR 2985060 A1 relates to scanning bar codes for content retrieval. EP2587770 A1 describes a system for displaying multimedia contents using RFID tags. There is therefore a need to perfect a network communication architecture and a method to reproduce multimedia contents that can overcome at least one of the shortcomings of the state of the art.

In particular, one purpose of the present invention is to obtain at least a network communication architecture and a method to reproduce multimedia contents that allow to supply each user having a portable electronic telecommunication device with a processor, such as for example a smartphone, a personal computer, a tablet or suchlike, with an innovative and interactive group or social experience, actively listening to pre-recorded music, or actively viewing audiovisuals, such as for example videoclips, films or suchlike, interacting therewith.

Another purpose of the present invention is to obtain a network communication architecture and perfect a method to reproduce multimedia contents that allow the active participation of the users involved in using the multimedia contents.

Another purpose of the present invention is to obtain a network communication architecture and perfect a method to reproduce multimedia contents that allow to increase the social interaction between a group of users involved in actuating the method reproducing the multimedia contents.

Another purpose of the present invention is to perfect a method to reproduce multimedia contents configured to allow to interact with a portable electronic telecommunication device, provided with a processor, and able to access pre-recorded sounds and/or images and to reproduce them, for active listening and/or active viewing, only when the portable electronic telecommunication device is associated with a determinate enabling support.

Another purpose of the present invention is to allow to use a portable electronic telecommunication device provided with a processor and able to access pre-recorded sounds and/or images and to reproduce them, activating a determinate application configured to allow to interact with the portable electronic telecommunication device, for an active listening and/or an active viewing, and to obtain an interactive reproduction of said sounds and/or images by the portable electronic telecommunication device, wherein the application is activated only after recognition by the portable electronic telecommunication device of a suitable enabling support.

The Applicant has devised, tested and embodied the present invention to obtain these and other purposes and advantages.

### SUMMARY OF THE INVENTION

The present invention is set forth and characterized in the independent claims, while the dependent claims describe other characteristics of the invention or variants to the main inventive idea.

Forms of embodiment described here concern a network communication architecture to reproduce pre-recorded multimedia contents. According to one form of embodiment, the network communication architecture comprises:
- a computer server system configured to allow access to a plurality of multimedia contents;
- a multimedia reproduction device connected to the computer server system and configured to reproduce the multimedia contents;
- a plurality of portable electronic telecommunication devices, wherein each of the portable electronic telecommunication devices is provided with a transmission element configured to transmit to the computer server system instruction signals for the reproduction of said multimedia contents, wherein the computer server system is configured to detect said instruction signals arriving from the portable electronic telecommunication devices and to command, depending on said instruction signals, a reproduction mode of the multimedia contents in said multimedia reproduction device;
- at least one enabling support element provided with an enablement code and configured to be read and acquired in order to selectively enable one or more of the portable electronic telecommunication devices for the reproduction of at least part of the pre-recorded multimedia contents;
wherein each of the portable electronic telecommunication devices is provided with a reading element configured to read and acquire the enablement code of the enabling support element, whereby said transmission element is configured to transmit to the computer server system the enablement code acquired.

Furthermore, according to the present invention, the computer server system is configured to enable, or not, the reproduction of at least part of the pre-recorded multimedia contents, depending on the enablement code wherein the reproduction is performed as a function of the instructions signals, wherein said instruction signals comprise the name of a user who has the portable electronic telecommunication device, how the portable electronic telecommunication device is moved by the user and the request for a predefined multimedia content.

According to one possible solution, the enabling support element can be associated with an enabling support.

According to some forms of embodiment of the invention, the enabling support can be for example a label, or other support mean, such as a sticker, a poster, an armband, of any shape and/or with any type of printing.

According to other forms of embodiment of the present invention, the enabling support element can be for example a simple bar code, a two-dimensional bar code, known as QR code, a radio frequency identification, known as RFID, that uses a tag or transponder, or any other graphical or identification system whatsoever.

In this way the aforesaid enabling support can be associated for example with a wide range of products, which by way of non-restrictive example comprise drinks, foodstuffs, gadgets to which labels can be associated, or other enabling supports, and also of services, such as for example the transmission of signals and/or messages, contained on paper and/or digital media, to which labels or other enabling supports can be associated, to allow each user to interact with any pre-recorded sound or image, or any audiovisual content that can be received by the portable electronic telecommunication device.

Each user brings his/her portable electronic telecommunication device near the enabling support which enables him/her to actively use a musical content or an audiovisual associated with the enabling support, in order to supply the user with a personalized experience of listening/use as a function of the type of movements chosen by the user him/herself, and also his/her main expressive characteristics and social behavior. According to a possible form of embodiment, at least one of either the computer server system or the portable electronic telecommunication device can implement one or more applications to manage the network communication architecture according to the present invention.

According to one possible solution, at least one of the applications can be an evolution of the known application Sync'n'Move cited above, which in the present case is advantageously associated with an enabling support as defined above.

According to some solutions of the present invention, a group of people, each having his/her own portable electronic telecommunication device, for example a smartphone, can explore and handle in real time a pre-recorded multimedia content through an enabling support as defined above.

The experience is based on non-verbal social interaction: for example the synchronization of a gesture, when a person's gesture is "timed" or in sync with that of the other people in the group (synchronization). Examples of usable algorithms of real-time analysis of social signals (entrainment, synchronization, leadership) are described in detail in the scientific articles cited above.

Some forms of embodiment of the present invention can provide that each portable electronic telecommunication device comprises at least a sensor configured to detect instruction signals relating to the movement modes of the portable electronic telecommunication device. In this way, the computer server system, which receives the instruction signals, can analyze the individual gesture of each individual user in order to analyze in real time the user's expressive qualities (fluid, impulsive, hesitant, energetic, stiff, etc.), which can be translated by the computer server system into different reproduction modes of the multimedia contents, for example changes in orchestration, timbre and interpretation of the musical piece.

The interaction does not envisage "correct" or "incorrect" gestures: the people in the group are not obliged to make the same gesture; what counts is that they move "in harmony", in sync with each other and possibly with recognizable expressive qualities in the gesture. They may choose, for example, to mime with the portable electronic telecommunication device the gesture of a drummer, or of the conductor, or more simply, to draw trajectories in the air, fluidly and in time with the music, or again to "wear it" (for example putting the smartphone in their pocket) and dance freely.

The movements of the portable electronic telecommunication devices can be detected in real time by means of the instruction signals of the sensors present in the portable electronic telecommunication devices (3-axis accelerometers, and possibly videocameras, microphones) and based on known algorithms for analyzing non-verbal social signals which, starting from the instruction signals acquired by the sensors, calculate the level of "harmony" in each pair of users, for example using techniques known to persons of skill in the art or original techniques developed by the inventors for this purpose and based on the phase synchronization of signals or other techniques (see for example the article cited above by Varni, Volpe, Camurri published in 2010 in IEEE Transactions on Multimedia). The computer server system receiving the instruction signals from the one or more portable electronic telecommunication devices can calculate the level of syntony between, for example, each pair of users and, based on this, can reconstruct and handle the pre-recorded music in real time, associating to each pair of users in sync the sound level and performance quality of an instrument or voice in the song.

Other functions may also be provided, for example using algorithms to calculate in real time the user who acts as leader of the group of users: greater functions and choices in musical processing and coordination over the other users are assigned to the leader.

In synthesis, the computer server system uses the information acquired by the accelerometers and possibly by other sensors contained in the portable electronic telecommunication device and calculates to what extent the users are in sync with each other and possibly who their leader is, moment by moment.

As the number of people or pairs of people in sync increases, the musical piece, initially characterized only by a simple rhythmic base, is enriched with new instruments, one for each user or new pair in sync. Each user or pair of users who is able to be synchronized makes a new instrument or section of the piece emerge. The volume of each section or instrument depends on the intensity of synchronization.

A wide range of variants are included in the present invention, all having as common denominator the active use of audiovisual contents by means of enabling supports, for example determinate labels.

In particular, variant embodiments of the present invention can provide:
- listening for each user, over headphones or by means of connected loudspeakers, with or without wires, with other users in the same place;
- listening to multimedia contents by means of several architectures according to the present invention, with the possibility of having users who interact remotely from different physical places;
- audiovisual use on connected wireless displays (for example of the type known as "interactive digital signage");
- different methods of handling the contents in real time (as well as the sum of the instruments - remix in real time - described in the previous example): for example timbre handling, soloist voice handling, handling the control of sound spatialization (for example "surround sound"), handling the acoustic performance and orchestration of the song;
- use in the open or in public premises (for example discos, pubs): in this case the computer server system could operate on the premise's personal computer, like a mixing bench controlled for example by a disc jockey or by the owner of the premises, in order to play music depending on the behavior of the users and for the potential objectives of the manager (for example, selling drinks or food, supplied with enabling supports, for example determinate labels associated with determinate products).

Some forms of embodiment of the present invention also concern a method to reproduce multimedia contents comprising:
- transmitting, by means of a plurality of transmission elements provided in respective portable electronic telecommunication devices, instruction signals of each of said portable electronic telecommunication devices to a computer server system;
- the reproduction of said multimedia contents by means of a multimedia reproduction device;
- determining, by means of said computer server system, a reproduction mode for said multimedia contents depending on said instruction signals received by said portable electronic telecommunication devices;
- reading and acquiring at least an enablement code present in an enabling support element by means of at least one of a plurality of reading elements provided in respective portable electronic telecommunication devices;
- transmitting, by means of said plurality of transmission elements, said enablement code to the computer server system;
the method further comprises:
- the selective enablement, depending at least on said enablement code, of at least one of said portable electronic telecommunication devices to access pre-recorded multimedia contents made available by said computer server system, wherein the reproduction is performed as a function of the instructions signals,
wherein said transmitting instruction signals comprises transmitting the name of a user who has the portable electronic telecommunication device, how the portable electronic telecommunication device is moved by the user and the request for a predefined multimedia content

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a schematic representation of a network communication architecture according to a possible form of embodiment;
- fig. 2 is a schematic representation of a network communication architecture according to another form of embodiment.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME FORMS OF EMBODIMENT

We shall now refer in detail to the various forms of embodiment of the present invention, of which one or more examples are shown in the attached drawing. Each example is supplied by way of illustration of the invention and shall not be understood as a limitation thereof. For example, the characteristics shown or described insomuch as they are part of one form of embodiment can be adopted on, or in association with, other forms of embodiment to produce another form of embodiment. It is understood that the present invention shall include all such modifications and variants.

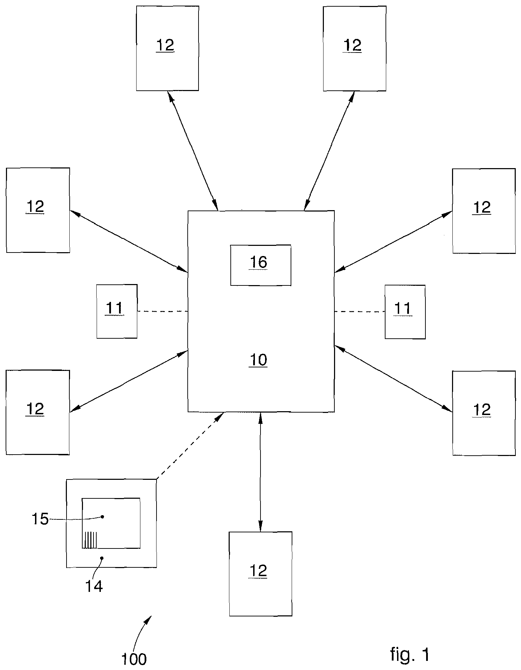

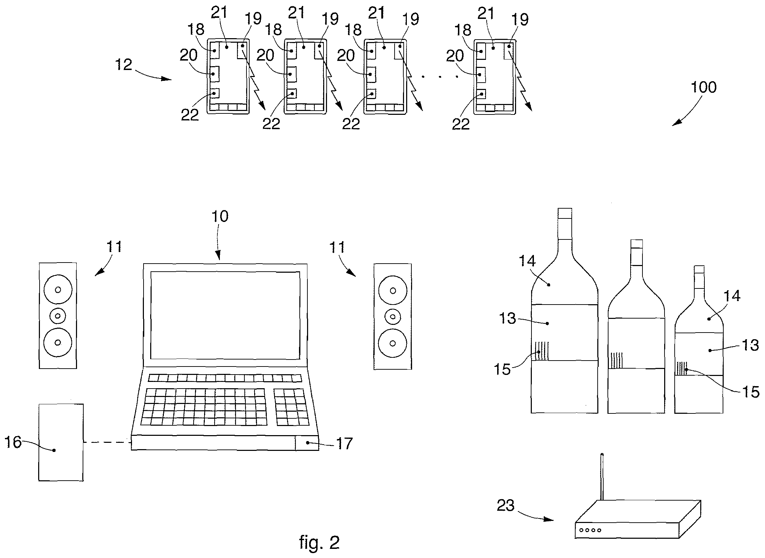

With reference to figs. 1 and 2, a network communication architecture for reproducing pre-recorded multimedia contents is indicated in its entirety by the reference number 100 and comprises at least a computer server system 10 which functions as a command and control unit. Examples of computer server system 10 can be a computer, portable computer, personal computer, smartphone, tablet, phablet, notebook, netbook or ultrabook.

The computer server system 10 is configured to allow access to a plurality of multimedia contents.

The multimedia contents can comprise at least one of musical pieces such as normal stereo audio files (commercial or created ad hoc), films, videoclips or suchlike.

The expression "pre-recorded multimedia contents" means that the multimedia contents are already completely available and memorized, locally or remote.

For example, according to some possible solutions, the computer server system 10 can be provided with its own memorization means in which the multimedia contents are stored.

According to another possible solution, the computer server system 10 can be selectively connected to a telematic network and can be configured to access pre-recorded multimedia contents available on the net. In this solution, the computer server system 10 can provide a web server that can be an Apache web server on a Linux platform with PHP-programmed software using a MySQL database. Additionally, the platform can use various techniques to establish communication with the clients and other services. For example, the network communication architecture 100 can include an application programming interface (API) to allow communication with clients, or other services. The API can be based on a Representational State Transfer (REST) architecture to distribute hypermedia systems.

According to one possible solution, the computer server system 10 can comprise a central processor or CPU, an electronic memory, an electronic database and auxiliary circuits (or I/O) (not shown).

For example, the CPU can be any kind of computer processor used in the IT field to control IT security. The electronic memory can be connected to the CPU and can be one or more of those available on the market, like a random access memory (RAM), a read-only memory (ROM), floppy disc, hard disc, mass memory or any other form of digital storage, local or remote. The software instructions and the data can be encoded for example and memorized in the memory to command the CPU.

The auxiliary circuits can also be connected to the CPU to conventionally assist the processor. The auxiliary circuits can include for example at least one of: cache circuits, feed circuits, clock circuits, input/output circuits, sub-systems and suchlike.

According to one possible solution, the computer server system 10 can comprise modulation devices 17 configured to modulate the reproduction of the multimedia contents and to vary the reproduction modes.

According to one possible solution, the modulation devices 17 can comprise an audio board integrated in the computer server system 10.

Merely by way of example, the modulation devices 17 can be configured to modulate at least one of either the quality, intensity, speed, type, piece of music, sound, video, images, parts or tracks of audio or video of the multimedia content that is reproduced.

According to one possible solution, the modulation devices 17 can be integrated into the central processor of the computer server system 10, and can be managed, for example, by a program.

According to other forms of embodiment, the computer server system 10 can be provided with, or integrate within itself, a network connection device 23, such as a modem router configured to generate a wireless network connectivity, for example Wi-Fi or Bluetooth.

The network connection device 23 is also configured to receive and transmit signals/information from other electronic devices, as will be clear hereafter in the description.

According to one possible solution, the computer server system 10 is connected to at least one multimedia reproduction device 11 to reproduce multimedia contents.

The multimedia reproduction device 11 comprises in this case two loudspeakers to reproduce sounds. However, it is not excluded that in other forms of embodiment, alternative or combinable with the forms of embodiment described here, the multimedia reproduction device 11 comprises image reproduction devices such as a screen.

According to one form of embodiment of the present invention, the network communication architecture 100 to reproduce multimedia contents comprises at least an enabling support element 15 configured to allow the selective enablement of the reproduction of at least part of the multimedia contents.

In particular, the enabling support element 15 can comprise at least an enablement code, readable by suitable readers, described hereafter, and that allow the selective enablement to reproduce one or more multimedia contents.

According to one possible solution, the enabling support element 15 can be supported by an enabling support 13.

According to a possible form of embodiment of the present invention, the enabling support 13 can comprise for example a label that is associated with a product 14, in this case a bottle.

According to possible solutions, the enabling support 13 can be for example a sticker, a poster, an armband, of any shape and or with any type of printing.

According to one possible solution, the enabling support element 15 can comprise at least one of either a tag for NFC (Near Field Communication) or RFID (Radio Frequency Identification), a numerical code, a one-dimensional (1-D) or two-dimensional (2-D) bar code from which it is possible to read an enablement code by means of a suitable reader. An example of a 2-D bar code is a QR code.

In possible forms of embodiment of the present invention, the network communication architecture 100 comprises a plurality of portable electronic telecommunication devices 12 of the mobile type, that is, transportable, configured for telecommunication and network data connectivity, as well as for acquiring and processing images and/or reading identification codes and/or optoelectronic reading and/or radio reading.

Each portable electronic telecommunication device 12 can be chosen from a group comprising a mobile phone, smartphone, tablet, phablet, netbook or similar portable electronic devices.

According to one possible solution of the present invention, each portable electronic telecommunication device 12 is provided with at least one reading element 18 configured to read the enabling support element 15 and in particular the enablement code associated therewith.

According to one possible solution, the reading element 18 can comprise for example a camera, usually integrated into the portable electronic telecommunication device 12.

According to possible solutions, the reading element 18 can be suitable to allow proximity communication such as an NFC (Near Field Communication) sensor, or an RFID reader.

According to another form of embodiment of the present invention, each portable electronic telecommunication device 12 can also comprise a transmission element 19 configured to send to the computer server system 10 both the enablement code and also instruction signals suitable to condition the reproduction of the multimedia contents.

Depending on the enablement code, the computer server system 10 will enable, or not, the reproduction of at least part of the multimedia contents as a function of the commands imparted by the portable electronic telecommunication device 12 itself.

According to one possible solution, the instruction signals sent by the transmission element 19 to the computer server system 10 comprise the name of the user who has the portable electronic telecommunication device 12, how the portable electronic telecommunication device 12 is moved by the user, the request for a predefined multimedia content, or other types of instruction signals that will be described hereafter.

The transmission element 19 can be chosen from a group comprising at least a wireless transmission module, a Bluetooth transmission module, or other similar or comparable communication modules.

According to another form of embodiment, the portable electronic telecommunication device 12 is provided with at least a sensor 20 configured to detect instruction signals relating to the movement modes of the portable electronic telecommunication device 12 by the user who usually handles it or wears it.

According to possible solutions, the sensor 20 can be chosen from a group comprising at least one of either a 3-axis accelerometer, an electronic gyroscope, a videocamera, a microphone.

According to this form of embodiment, it can be provided that the transmission element 19 is configured to send to the computer server system 10 the instruction signals detected by the sensors 20 of each of the portable electronic telecommunication devices 12.

According to one possible solution, the modulation devices 17 present in the computer server system 10 are configured to modulate the reproduction of the multimedia contents and to vary the reproduction modes thereof. In this way, depending on the gestures according to which the portable electronic telecommunication device 12 is moved, the computer server system 10 is able to define a different reproduction mode of the multimedia contents.

According to one possible solution, the portable electronic telecommunication device 12 can also be provided with a reception element 22 configured to allow the reception of information by the computer server system 10.

In this way, the portable electronic telecommunication device 12 can receive information from the computer server system 10 such as the types of multimedia contents available, the number of users connected to the computer server system 10, the name of the users connected to the computer server system 10, the name of a specific user who is distinguished from the other users with regard to the instruction signals supplied by the sensors 20, according to one of the criteria illustrated hereafter, and so on.

The reception element 22 can be chosen from a group comprising at least a wireless reception module, a Bluetooth reception module or other similar or comparable communication modules.

According to another solution, the portable electronic telecommunication device 12 is provided with a processor 21 configured to manage the functioning of the portable electronic telecommunication device 12 and in particular at least one of either the reading element 18, the transmission element 19, the reception element 22 or the sensor 20.

A program (or computer instructions) readable by the processor 21 and/or by the computer server system 10 can determine which tasks can be done according to a reproduction method that will be described hereafter. In some forms of embodiment, the program is a software readable by the processor 21 and/or by the computer server system 10. The processor 21 includes a code to generate and memorize information and data introduced or generated during the method according to the present description.

According to one possible solution of the present invention, the computer server system 10 operates as a server for one or more of the portable electronic telecommunication devices 12.

According to a possible variant, the computer server system 10 can be integrated into one of the portable electronic telecommunication devices 12.

In fact, in a dynamic manner, one of the portable electronic telecommunication devices 12 can on each occasion be temporarily enabled, by the acquisition of the enabling support element 15, on a server level, on which other portable electronic telecommunication devices 12 can depend in a decentralized star communication network structure. In this way any user, equipped with the portable electronic telecommunication device 12 that is enabled to become a computer server system 10, can manage the reproduction modes of the multimedia contents also as a function of the instruction signals that arrive from the other telecommunication devices 12.

Consequently, once one of the portable electronic telecommunication devices 12 has read the enablement code of one of the enabling support elements 15, it is elected or enabled as server, at least temporarily, for all the other portable electronic telecommunication devices 12. The portable electronic telecommunication device 12 enabled as temporary server in this case performs the function of the computer server system 10.

The portable electronic telecommunication device 12 enabled as server establishes, as we said, a star communication network to communicate with all the other portable electronic telecommunication devices 12, and these, in their turn, will be connected in dependence to the portable electronic telecommunication device 12 enabled as server (one-for-all and all-for-one network connection).

The portable electronic telecommunication devices 12 of the users who want to access the services of a computer server system 10 can display on their graphical user interface the portable electronic telecommunication device 12 dynamically enabled as computer server system 10, and possibly also information on the multimedia contents associated therewith, and can select said device 12, connecting to it.

It is also possible that more than one portable electronic telecommunication device 12 can be dynamically enabled as computer server system 10. In this case the portable electronic telecommunication devices 12 of the users that want to access the services of a computer server system 10 can display on their graphical user interface a list of the portable electronic telecommunication devices 12 that are dynamically enabled as computer server system 10: possibly, for each of them information on the multimedia contents associated with it can also be presented. The user can therefore select, by means of his/her own portable electronic telecommunication device 12, a computer server system 10 from the list, and can connect to it, for example depending on his/her own tastes in relation to the multimedia contents proposed by the specific computer server system 10.

The portable electronic telecommunication device 12 enabled as server will therefore be able to manage, possibly also with the aid of a program implemented therein, the instruction signals arriving from the sensors 20 of each of the portable electronic telecommunication devices 12 and, based on the program implemented by it, to define a predefined reproduction mode of the multimedia contents. Furthermore, this solution can also allow an exchange of information between the portable electronic telecommunication devices 12 and can therefore allow an interaction between the various users equipped with the portable electronic telecommunication device 12.

According to one possible solution, the portable electronic telecommunication device 12 enabled as server can also display, possibly on a graphical interface, the number and/or name of the portable electronic telecommunication devices 12 associated therewith, and identify which of them have predefined gestures, for example synchronous with its own.

According to one possible solution, the network communication architecture 100 can also comprise a code reader 16, to read each code of the enabling support element 15 and send to the corresponding portable electronic telecommunication device 12, and/or to the computer server system 10, a corresponding signal enabling the use of the multimedia content. According to possible solutions of the present invention, the code reader 16 can comprise an NFC reader or a video camera, or camera, which acquires an image of a code, for example a QR code, and removes from it a code that the computer server system 10 uses in order to release the reproduction of the contents.

Some forms of embodiment of the present invention also concern a method to reproduce multimedia contents that can be implemented in a network communication architecture 100 as described above.

According to one possible solution, the method according to the present invention comprises reading the enablement code present in the enabling support element 15 by means of at least one of the reading elements 18 of the portable electronic telecommunication devices 12.

In particular, it may be provided that the reproduction of the multimedia contents is not activated until a portable electronic telecommunication device 12 is brought near the enabling support 13, which in the example given here is the label of a bottle 14, or to the code reader 16.

When the reading element 18 of the portable electronic telecommunication device 12 or the code reader 16 (by way of example but not restrictively) equipped with the proximity communication sensor or NFC (or other RFID tags), reads the enablement code of the enabling support element 15, at least the enablement code is sent by the transmission elements 19 to the computer server system 10, which selectively enables the reproduction of one or more multimedia contents.

According to one possible solution, a predefined multimedia content can be associated with the enablement code present in the enabling support element 15, for example the audio of a piece, or part of a piece (for example an instrument or a track) can be associated therewith.

After enablement, the start of the reproduction of the multimedia content can be determined automatically, or activated by the user.

During this step it is provided that the portable electronic telecommunication devices 12 involved and enabled also transmit to the computer server system 10 instruction signals of each of the portable electronic telecommunication devices 12, for example instruction signals relating to the movement modes of the latter.

In particular, it may be provided that, at the start of the reproduction of the multimedia content, an audio feedback or audio/video feedback informs those who are present on the premises that the "game" has started: for example, a piece starts with good quality for a few seconds and then adapts to the energy and synchronization with which the portable electronic telecommunication devices 12 involved are moved: otherwise, vocal feedback.

If only one portable electronic telecommunication device 12 is enabled, it may allow the reproduction of one multimedia content, managing only the quantity of energy with which the portable electronic telecommunication device 12 is moved and the level of synchronization, that is, the rhythm and gestures with the music.

Every new user can enter into the game in one of the following two ways:
1. the user brings his/her portable electronic telecommunication device 12, or code reader 16, near to the enabling support 13 (if the portable electronic telecommunication device 12 is equipped with NFC); or
2. the user receives in his/her portable electronic telecommunication device 12 information relating to the multimedia content being reproduced (play), for example information on the piece (title, author, possible ads, etc.), and decides whether to connect to (join) the session and hence contribute to the active listening of the piece, sending a connection signal to the computer server system 10 or to the portable electronic telecommunication device 12 enabled as server.

Any user can disconnect from the game by acting on suitable commands of the interface of the portable electronic telecommunication device 12 and by sending a signal to disconnect from the computer server system 10.

During the reproduction of the multimedia content, the keys and touch screen of the active portable electronic telecommunication devices 12 can be blocked, to prevent involuntary switching off.

The piece activated can be performed in a loop or once only, according to commands set in the computer server system 10 or requested by one of the portable electronic telecommunication devices 12: the manager of the computer server system 10, for example a disc jockey, can define for every enabling support 13 the number of times that the associated piece can be performed.

To restart the action or game, the portable electronic telecommunication device 12 equipped with NFC reader, or the code reader 16, must again be brought near a product 14 or other enabling support 13.

If, during the game, a portable electronic telecommunication device 12 is brought near another enabling support 13, it is possible to select (through the computer server system 10) one of the following different options:
- the new piece is put in line (like reserving in a juke box);
- the new piece immediately replaces the one being reproduced;
- an enabling support 13 cannot be activated while a piece is being played.

If the portable electronic telecommunication devices 12 can be selectively elected as temporary computer server system 10 for the other portable electronic telecommunication devices 12, it can be provided that, once one portable electronic telecommunication device 12 has been enabled by reading the enabling support element 15, it is put in line with the other portable electronic telecommunication devices 12 already enabled, and when its turn comes, reproduction is started of the specific multimedia content requested. When the reproduction of the multimedia content is started, the last portable electronic telecommunication device 12 is enabled as computer server system 10 for all the others.

Furthermore, depending on the movement energy and/or the rhythm, it is possible to condition at least one of either the quality, intensity, type or piece of music or sound that is reproduced.

According to one possible solution, the instruction signals detected by the portable electronic telecommunication devices 12 can be managed by the known application Sync'n'Move cited above, that is, the sensors 20 measure the "energy" with which the portable electronic telecommunication device 12 (for example, the smartphone held in the hand or in the pocket when one is dancing) is made to move: the more portable electronic telecommunication devices 12 there are with high energy, the higher is the quality of the piece listened to. In other words, each portable electronic telecommunication device 12 contributes to the overall sound quality.

According to some possible forms of embodiment, the computer server system 10 recognizes the movements and gestures of the portable electronic telecommunication device 12 owned by a user and is able to perceive the level of entertainment that has been established in the place where the game is in progress, and possibly to understand which user is the leader of the game.

Privileged or master portable electronic telecommunication devices 12 (or the computer server system 10, operating as server) can be defined, which can act on the playlist and on the parameters described above (for example, acting on the end of the pieces listened to).

The following variants/extensions are also provided:
- one of the active portable electronic telecommunication devices 12 could contribute separately to the surround, that is, it moves the music in the space (for example left/right gestures with the smartphone): this could correspond to the user who is acting as leader in the group;
- in the case of multi-track audio, the different audio tracks can be assigned to different enabling supports 13, so that in order to complete the piece, several enabling supports 13 need to be activated.
- the measurement of the synchronization between the portable electronic telecommunication devices 12 could also be used, alternatively:
   - to further reinforce the volume (dynamic boost);
   - to make the volumes uniform (that is, make the levels of the tracks equal to each other, so that the piece is heard in the ideal way. Only the master is controlled generally by the sum of the portable electronic telecommunication devices 12), or
   - to block the volume for a few seconds (for example 15-20). This allows to keep the volume reached even without having to move the portable electronic telecommunication devices 12, or
   - for a bonus track: a track currently not in the playlist is added at the end as the next event.
- karaoke version: no audio is played, but a MIDI (so the multi-track is automatic; possibility of acting on the tempo). The voice must be one of the users'.

The following other software options are also provided:
- Bluetooth and WiFiDirect support;
- by bringing the portable electronic telecommunication device 12 near to an enabling support 13 for the first time, an application is automatically downloaded for the portable electronic telecommunication device 12 suitable to control the interaction between the various components of the portable electronic telecommunication device 12 and the computer server system 10 outside the device 12.

Other particular uses, situations and scenarios:
- use of the system consisting of enabling supports 13/portable electronic telecommunication devices 12 as a simple jukebox: the music is booked from a station, for example a table, with the enabling support 13 that replaces the coin (in this case the portable electronic telecommunication device 12 does not need to be moved);
- videoclips are controlled in real time, including the inclusion of the users, acquired in real time by the videocamera, inside the video.

The use of NFC tags is very advantageous because through them the identification of the product, and therefore the use of its multimedia content, can be made univocal. That is to say, only one person will correspond to one tag.

Example application:
1) purchase of a drink/product equipped with the technology according to the present invention;
2) coupling of the portable electronic telecommunication device 12 (for example a smartphone) with the NFC tag. This procedure "uses" the tag that from that moment on will no longer be usable except by the same device that carried out the first coupling;
3) use of the content as follows:
   3.a. the univocal enablement code, or id, in the NFC tag allows access to a possible automatic management of prizes (for example: you have won a smart);
   3.b. the univocal enablement code, or id, is useful in the production chain as well, in identification of batches etc., etc., for real-time messages to clients (for example: do not drink that batch because it is spoiled);
   3.c. estimate of sales: when the tag is read, the computer server system 10 can record that the product is about to finish, real-time statistics regarding the enjoyment and consumption of the products, adaptation of production;
   3.d. distribution of discount coupons (utility associated with point 3.a.);
   3.e. tracking the products, in addition to point 3.c.

Some forms of embodiment can provide to carry out various steps, passes and operations as described above. Said steps, passes and operations can be carried out with instructions executed by a machine that cause certain steps to be executed by a general-purpose or special-purpose processor. Alternatively, said steps, passes and operations can be carried out by specific hardware components that contain hardware logic to effect the steps, or by any combination whatsoever of components for programmed computers and personalized hardware components.

Some forms of embodiment of the method according to the present description can be included in a computer program memorizable in a mean that can be read by a computer that contains the instructions which, once executed by the network communication architecture 100, cause the execution of the method in question.

In particular, elements according to the present invention can be supplied as means readable by a machine to memorize the instructions that the machine can perform. The readable means can include, but are not limited to, floppy disks, optical disks, CD-ROM, and magneto-optical disks, ROM, RAM, EPROM, EEPROM, optical or magnetic boards, propagation means or other types of means readable by a machine and suitable to memorize electronic information. For example, the present invention can be downloaded as a computer program that can be transferred from a remote computer (for example a server) to a computer that makes a request (for example client), by means of data signals obtained with carrier waves or other propagation means, via a communication connection (for example a modem or network connection).

It is clear that modifications and/or additions of parts may be made to the network communication architecture 100 and the method to reproduce multimedia contents as described heretofore, without departing from the field and scope of the present invention.

It is also clear that, although the present invention has been described with reference to some specific examples, a person of skill in the art shall certainly be able to achieve many other equivalent forms of network communication architecture 100 and the method to reproduce multimedia contents , having the characteristics as set forth in the claims and hence all coming within the field of protection defined thereby.

## Claims

1. Network communication architecture configured to reproduce pre-recorded multimedia contents, the network communication architecture comprising:
- a computer server system (10) configured to allow access to a plurality of said multimedia contents;
- a multimedia reproduction device (11) connected to the computer server system (10) and configured to reproduce said multimedia contents;
- a plurality of portable electronic telecommunication devices (12) wherein each of said portable electronic telecommunication devices (12) is provided with a transmission element (19) configured to transmit to the computer server system (10) instruction signals for the reproduction of said multimedia contents, said computer server system (10) being configured to detect said instruction signals arriving from said portable electronic telecommunication devices (12) and to command, depending on said instruction signals, a reproduction mode of said multimedia contents in said multimedia reproduction device (11), the network communications architecture further comprising at least one enabling support element (15) provided with an enablement code and configured to be read and acquired in order to selectively enable one or more of said portable electronic telecommunication devices (12) for the reproduction of at least part of said pre-recorded multimedia contents, wherein each of said portable electronic telecommunication devices (12) is provided with a reading element (18) configured to read and acquire the enablement code of said enabling support element (15), whereby said transmission element (19) is configured to transmit to the computer server system (10) the enablement code acquired, the network communications architecture **characterized in that** said computer server system (10) is configured to enable, or not, the reproduction of at least part of the pre-recorded multimedia contents, depending on the enablement code wherein the reproduction is performed as a function of the instructions signals, wherein said instruction signals comprise the name of a user who has the portable electronic telecommunication device (12), how the portable electronic telecommunication device (12) is moved by the user and the request for a predefined multimedia content.

2. Network communication architecture as defined in claim 1, **characterized in that** each of said portable electronic telecommunication devices (12) is provided with at least sensor (20) configured to detect said instruction signals relating to the movement modes of said portable electronic telecommunication device (12), by a user, **and in that** said transmission element (19) is configured to send said instruction signals to said computer server system (10).

3. Network communication architecture as defined in any claim hereinbefore, **characterized in that** said computer server system (10) comprises modulation devices (17) configured to modulate the reproduction of said multimedia contents and to vary the reproduction modes.

4. Network communication architecture as defined in claim 2 and 3, **characterized in that** said modulation devices (17) are configured to process the instruction signals supplied by said sensors (20) and to determine a reproduction mode of said multimedia contents.

5. Network communication architecture as defined in any claim hereinbefore, **characterized in that** said computer server system (10) is integrated in one of said portable electronic telecommunication devices (12).

6. Network communication architecture as defined in any claim hereinbefore, **characterized in that** the network communication architecture comprises a code reader (16), outside said portable electronic telecommunication devices (12) and configured to read a code of said enabling support element (15) and to send an enablement signal to one of said portable electronic telecommunication devices (12).

7. Network communication architecture as defined in any claim hereinbefore, **characterized in that** said enabling support element (15) is supported by an enabling support (13).

8. Network communication architecture as defined in any claim hereinbefore, **characterized in that** each of said portable electronic telecommunication devices (12) is provided with a reception element (22) configured to allow the reception of information by said computer server system (10), said information including the types of multimedia contents available, the number of users connected to said computer server system (10), the name of the users connected to said computer server system (10), the name of a specific user.

9. Method to reproduce multimedia contents comprising:
- transmitting, by means of a plurality of transmission elements (19) provided in respective portable electronic telecommunication devices (12), instruction signals of each of said portable electronic telecommunication devices (12) to a computer server system (10);
- the reproduction of said multimedia contents by means of a multimedia reproduction device (11);
- determining, by means of said computer server system (10), a reproduction mode for said multimedia contents depending on said instruction signals received by said portable electronic telecommunication devices (12);
- reading and acquiring at least an enablement code present in an enabling support element (15) by means of at least one of a plurality of reading elements (18) provided in respective portable electronic telecommunication devices (12)
- transmitting, by means of said plurality of transmission elements (19), said enablement code to the computer server system (10);
the method **characterized in that** it comprises
- the selective enablement, depending at least on said enablement code, of at least one of said portable electronic telecommunication devices (12) to access pre-recorded multimedia contents made available by said computer server system (10), wherein the reproduction is performed as a function of the instructions signals,
wherein said transmitting instruction signals comprises transmitting the name of a user who has the portable electronic telecommunication device (12), how the portable electronic telecommunication device (12) is moved by the user and the request for a predefined multimedia content.

10. Method as in claim 9, **characterized in that** it comprises the detection of said instruction signals relating to the movement modes of said portable electronic telecommunication devices (12) due to the action of the users themselves, and the transmission of said instruction signals by means of the respective transmission elements (19) to said computer server system (10).

11. Method as in claim 9 or 10, **characterized in that**, during said reproduction, it provides to modulate the reproduction of said multimedia contents in order to vary the reproduction modes.

12. Method as in claim 11, **characterized in that** the modulation of the reproduction of said multimedia contents is determined as a function of the instruction signals relating to the movement modes of said portable electronic telecommunication devices (12).

13. Method as in any claim from 9 to 12, **characterized in that** after said enablement code has been read and acquired, at least one of the portable electronic telecommunication devices (12) performs the function of computer server system (10), establishing a star communication network with all the other portable electronic telecommunication devices (12).

14. Method as in any claim from 9 to 13, **characterized in that** it provides the reception in said portable electronic telecommunication devices (12) of information by said computer server system (10), said information including the types of multimedia contents available, the number of users connected to said computer server system (10), the name of the users connected to said computer server system (10), the name of a specific user.

## Patentansprüche

1. Netzwerkkommunikationsarchitektur, die dafür ausgelegt ist, vorbespielte Multimedia-Inhalte wiederzugeben, wobei die Netzwerkkommunikationsarchitektur umfasst:
- ein Computerserversystem (10), das dafür ausgelegt ist, Zugang zu einer Vielzahl von Multimedia-Inhalten zu gestatten;
- eine Multimedia-Wiedergabe-Einrichtung (11), die mit dem Computerserversystem (10) verbunden und dafür ausgelegt ist, die Multimedia-Inhalte wiederzugeben;
- eine Vielzahl von tragbaren elektronischen Telekommunikationseinrichtungen (12), worin jede der genannten tragbaren elektronischen Telekommunikationseinrichtungen (12) mit einem Übertragungselement (19) versehen ist, das dafür ausgelegt ist, dem Computerserversystem (10) Anweisungssignale für die Wiedergabe der Multimedia-Inhalte zu übertragen, wobei das Computerserversystem (10) dafür ausgelegt ist, die Anweisungssignale zu ermitteln, die von den tragbaren elektronischen Telekommunikationseinrichtungen (12) kommen, und, in Abhängigkeit von den Anweisungssignalen, einen Wiedergabemodus der Multimedia-Inhalte in der Multimedia-Wiedergabe-Einrichtung (11) zu befehlen, wobei die Netzwerkkommunikationsarchitektur ferner zumindest ein Freigabe-Unterstützungselement (15) umfasst, das mit einem Freigabecode versehen ist und dafür ausgelegt ist, gelesen und erfasst zu werden, um eine oder mehrere der tragbaren elektronischen Telekommunikationseinrichtungen (12) zur Wiedergabe von zumindest einem Teil der vorbespielten Multimedia-Inhalte selektiv freizugeben, worin jede der tragbaren elektronischen Telekommunikationseinrichtungen (12) mit einem Leseelement (18) versehen ist, das dafür ausgelegt ist, den Freigabecode des Freigabe-Unterstützungselementes (15) zu lesen und zu erfassen, wobei das Übertragungselement (19) dafür ausgelegt ist, dem Computerserversystem (10) den erfassten Freigabecode zu übertragen, wobei die Netzwerkkommunikationsarchitektur **dadurch gekennzeichnet ist, dass** das Computerserversystem (10) dafür ausgelegt ist, die Wiedergabe von zumindest einem Teil der vorbespielten Multimedia-Inhalte, in Abhängigkeit von dem Freigabecode, freizugeben oder nicht freizugeben, worin die Wiedergabe in Abhängigkeit von den Anweisungssignalen durchgeführt wird, worin die Anweisungssignale den Namen eines Benutzers, der die tragbare elektronische Telekommunikationseinrichtung (12) hat, wie die tragbare elektronische Telekommunikationseinrichtung (12) vom Benutzer bewegt wird, und die Anforderung eines vorbestimmten Multimedia-Inhalts umfassen.

2. Netzwerkkommunikationsarchitektur nach Anspruch 1, **dadurch gekennzeichnet, dass** jede der tragbaren elektronischen Telekommunikationseinrichtungen (12) mit zumindest einem Sensor (20) versehen ist, das dafür ausgelegt ist, die Anweisungssignale zu ermitteln, die sich auf die Bewegungsmodi der tragbaren elektronischen Telekommunikationseinrichtung (12), durch einen Benutzer, beziehen, **und dass** das Übertragungselement (19) dafür ausgelegt ist, dem Computerserversystem (10) die Anweisungssignale zu senden.

3. Netzwerkkommunikationsarchitektur nach einem der vorhergehenden Ansprüche, **dadurch gekennzeichnet, dass** das Computerserversystem (10) Modulationsvorrichtungen (17) umfasst, die dafür ausgelegt sind, die Wiedergabe der Multimedia-Inhalte zu modulieren und die Wiedergabemodi zu ändern.

4. Netzwerkkommunikationsarchitektur nach Anspruch 2 und 3, **dadurch gekennzeichnet, dass** die Modulationsvorrichtungen (17) dafür ausgelegt sind, die Anweisungssignale zu verarbeiten, die von den Sensoren (20) geliefert werden, und einen Wiedergabemodus der Multimedia-Inhalte zu bestimmen.

5. Netzwerkkommunikationsarchitektur nach einem der vorhergehenden Ansprüche, **dadurch gekennzeichnet, dass** das Computerserversystem (10) in eine der tragbaren elektronischen Telekommunikationseinrichtungen (12) integriert ist.

6. Netzwerkkommunikationsarchitektur nach einem der vorhergehenden Ansprüche, **dadurch gekennzeichnet, dass** die Netzwerkkommunikationsarchitektur einen Codeleser (16) umfasst, der außerhalb der tragbaren elektronischen Telekommunikationseinrichtungen (12) angeordnet und dafür ausgelegt ist, einen Code des Freigabe-Unterstützungselementes (15) zu lesen und einer der tragbaren elektronischen Telekommunikationseinrichtungen (12) ein Freigabesignal zu senden.

7. Netzwerkkommunikationsarchitektur nach einem der vorhergehenden Ansprüche, **dadurch gekennzeichnet, dass** das Freigabe-Unterstützungselement (15) durch eine Freigabe-Unterstützung (13) unterstützt ist.

8. Netzwerkkommunikationsarchitektur nach einem der vorhergehenden Ansprüche, **dadurch gekennzeichnet, dass** jede der tragbaren elektronischen Telekommunikationseinrichtungen (12) mit einem Empfangselement (22) versehen ist, das dafür ausgelegt ist, den Empfang von Informationen durch das Computerserversystem (10) zu gestatten, wobei die Informationen die Typen von verfügbaren Multimedia-Inhalten, die Anzahl der Benutzer, die mit dem Computerserversystem (10) verbunden sind, den Namen der Benutzer, die mit dem Computerserversystem (10) verbunden sind, den Namen eines bestimmten Benutzers umfassen.

9. Verfahren zur Wiedergabe von Multimedia-Inhalten, umfassend:
- Übertragen, über eine Vielzahl von Übertragungselementen (19), die in jeweiligen tragbaren elektronischen Telekommunikationseinrichtungen (12) vorgesehen sind, von Anweisungssignalen jeder der tragbaren elektronischen Telekommunikationseinrichtungen (12) einem Computerserversystem (10);
- die Wiedergabe der Multimedia-Inhalte über eine Multimedia-Wiedergabe-Einrichtung (11);
- Bestimmen, über das Computerserversystem (10), eines Wiedergabemodus für die Multimedia-Inhalte in Abhängigkeit von den Anweisungssignalen, die von den tragbaren elektronischen Telekommunikationseinrichtungen (12) empfangen werden;
- Lesen und Erfassen von zumindest einem Freigabecode, der in einem Freigabe-Unterstützungselement (15) vorhanden ist, über zumindest eines von einer Vielzahl von Leseelementen (18), die in jeweiligen tragbaren elektronischen Telekommunikationseinrichtungen (12) vorgesehen sind;
- Übertragen, über die Vielzahl von Übertragungselementen (19), des Freigabecodes dem Computerserversystem (10);
wobei das Verfahren **dadurch gekennzeichnet ist, dass** es umfasst:
- die selektive Freigabe, in Abhängigkeit zumindest von dem Freigabecode, von zumindest einer der tragbaren elektronischen Telekommunikationseinrichtungen (12) zum Zugang zu vorbespielten Multimedia-Inhalten, die vom Computerserversystem (10) bereitgestellt werden, worin die Wiedergabe in Abhängigkeit von den Anweisungssignalen durchgeführt wird,
worin das Übertragen der Anweisungssignale das Übertragen des Namens eines Benutzers, der die tragbare elektronische Telekommunikationseinrichtung (12) hat, wie die tragbare elektronische Telekommunikationseinrichtung (12) vom Benutzer bewegt wird, und das Übertragen der Anforderung eines vorbestimmten Multimedia-Inhalts umfasst.

10. Verfahren nach Anspruch 9, **dadurch gekennzeichnet, dass** es die Ermittlung der Anweisungssignale, die sich auf die Bewegungsmodi der tragbaren elektronischen Telekommunikationseinrichtungen (12) aufgrund der Handlung der Benutzer selbst beziehen, und die Übertragung der Anweisungssignale über die jeweiligen Übertragungselemente (19) dem Computerserversystem (10) umfasst.

11. Verfahren nach Anspruch 9 oder 10, **dadurch gekennzeichnet, dass** es während der Wiedergabe vorsieht, die Wiedergabe der Multimedia-Inhalte zu modulieren, um die Wiedergabemodi zu ändern.

12. Verfahren nach Anspruch 11, **dadurch gekennzeichnet, dass** die Modulation der Wiedergabe der Multimedia-Inhalte in Abhängigkeit von den Anweisungssignalen bestimmt wird, die sich auf die Bewegungsmodi der tragbaren elektronischen Telekommunikationseinrichtungen (12) beziehen.

13. Verfahren nach einem der Ansprüche 9 bis 12, **dadurch gekennzeichnet, dass**, nachdem der Freigabecode gelesen und erfasst worden ist, zumindest eine der tragbaren elektronischen Telekommunikationseinrichtungen (12) die Aufgabe eines Computerserversystems (10) erfüllt, indem sie ein Sternkommunikationsnetzwerk mit allen anderen tragbaren elektronischen Telekommunikationseinrichtungen (12) herstellt.

14. Verfahren nach einem der Ansprüche 9 bis 13, **dadurch gekennzeichnet, dass** es den Empfang in den tragbaren elektronischen Telekommunikationseinrichtungen (12) von Informationen durch das Computerserversystem (10) vorsieht, wobei die Informationen die Typen von verfügbaren Multimedia-Inhalten, die Anzahl der Benutzer, die mit dem Computerserversystem (10) verbunden sind, den Namen der Benutzer, die mit dem Computerserversystem (10) verbunden sind, den Namen eines bestimmten Benutzers umfassen.

## Revendications

1. Architecture de communication de réseau configurée pour reproduire des contenus multimédia préenregistrés, l'architecture de communication de réseau comprenant :
- un système (10) de serveur informatique configuré pour permettre l'accès à une pluralité desdits contenus multimédias ;
- un dispositif (11) de reproduction multimédia connecté au système (10) de serveur informatique et configuré pour reproduire ledit contenu multimédia ;
- une pluralité de dispositifs de télécommunication électroniques portables (12), chacun desdits dispositifs de télécommunication électroniques portables (12) étant muni d'un élément de transmission (19) configuré pour transmettre au système (10) de serveur informatique des signaux d'instruction pour la reproduction desdits contenus multimédia, ledit système (10) de serveur informatique étant configuré pour détecter lesdits signaux d'instruction arrivant desdits dispositifs de télécommunication électroniques portables (12) et pour commander, en fonction desdits signaux d'instruction, un mode de reproduction desdits contenus multimédia dans ledit dispositif (11) de reproduction multimédia, l'architecture de communications de réseau comprenant en outre au moins un élément de support d'habilitation (15) muni d'un code d'habilitation et configuré pour être lu et acquis afin d'activer sélectivement un ou plusieurs desdits dispositifs de télécommunication électroniques portables (12) pour la reproduction d'au moins une partie desdits contenus multimédia préenregistrés, chacun desdits dispositifs de télécommunication électroniques portables (12) étant muni d'un élément de lecture (18) configuré pour lire et acquérir le code d'habilitation dudit élément de support d'habilitation (15), moyennant quoi ledit élément de transmission (19) est configuré pour transmettre au système (10) de serveur informatique le code d'habilitation acquis, l'architecture de communication du réseau étant **caractérisée en ce que** ledit système (10) de serveur informatique est configuré pour activer, ou non, la reproduction d'au moins une partie des contenus multimédia préenregistrés, en fonction du code d'habilitation, la reproduction étant effectuée en fonction des signaux d'instructions, lesdits signaux d'instructions comprenant le nom d'un utilisateur qui possède le dispositif de télécommunication électronique portable (12), la manière dont le dispositif de télécommunication électronique portable (12) est déplacé par l'utilisateur et la requête pour un contenu multimédia prédéfini.

2. Architecture de communication de réseau telle que définie dans la revendication 1, **caractérisée en ce que** chacun desdits dispositifs de télécommunication électroniques portables (12) est muni d'au moins un capteur (20) configuré pour détecter lesdits signaux d'instruction relatifs aux modes de déplacement dudit dispositif de télécommunication électronique portable (12), par un utilisateur, et **en ce que** ledit élément de transmission (19) est configuré pour envoyer lesdits signaux d'instruction audit système (10) de serveur informatique.

3. Architecture de communication de réseau telle que définie dans l'une quelconque des revendications ci-dessus, **caractérisée en ce que** ledit système (10) de serveur informatique comprend des dispositifs de modulation (17) configurés pour moduler la reproduction desdits contenus multimédia et pour faire varier les modes de reproduction.

4. Architecture de communication de réseau telle que définie dans les revendications 2 et 3, **caractérisée en ce que** lesdits dispositifs de modulation (17) sont configurés pour traiter les signaux d'instruction fournis par lesdits capteurs (20) et pour déterminer un mode de reproduction desdits contenus multimédia.

5. Architecture de communication de réseau telle que définie dans l'une quelconque des revendications précédentes, **caractérisée en ce que** ledit système (10) de serveur informatique est intégré dans l'un desdits dispositifs de télécommunication électroniques portables (12).

6. Architecture de communication de réseau telle que définie dans l'une quelconque des revendications précédentes, **caractérisée en ce que** l'architecture de communication de réseau comprend un lecteur de code (16), à l'extérieur desdits dispositifs de télécommunication électroniques portables (12) et configuré pour lire un code dudit élément de support d'habilitation (15) et pour envoyer un signal d'habilitation à l'un desdits dispositifs de télécommunication électroniques portables (12).

7. Architecture de communication de réseau telle que définie dans l'une quelconque des revendications ci-dessus, **caractérisée en ce que** ledit élément de support d'habilitation (15) est supporté par un support d'habilitation (13).

8. Architecture de communication de réseau telle que définie dans l'une quelconque des revendications précédentes, **caractérisée en ce que** chacun desdits dispositifs de télécommunication électroniques portables (12) est muni d'un élément de réception (22) configuré pour permettre la réception d'informations par ledit système (10) de serveur informatique, lesdites informations comprenant les types de contenus multimédia disponibles, le nombre d'utilisateurs connectés audit système (10) de serveur informatique, le nom des utilisateurs connectés audit système (10) de serveur informatique, le nom d'un utilisateur spécifique.

9. Procédé de reproduction de contenus multimédia comprenant :
- le fait de transmettre, au moyen d'une pluralité d'éléments de transmission (19) prévus dans des dispositifs de télécommunication électroniques portables (12) respectifs, des signaux d'instruction de chacun desdits dispositifs de télécommunication électroniques portables (12) à un système (10) de serveur informatique ;
- la reproduction desdits contenus multimédia au moyen d'un dispositif (11) de reproduction multimédia ;
- le fait de déterminer, au moyen dudit système (10) de serveur informatique, un mode de reproduction pour lesdits contenus multimédia en fonction desdits signaux d'instruction reçus par lesdits dispositifs de télécommunication électroniques portables (12) ;
- le fait de lire et d'acquérir au moins un code d'habilitation présent dans un élément de support d'habilitation (15) au moyen d'au moins un parmi une pluralité d'éléments de lecture (18) prévus dans des dispositifs de télécommunication électroniques portables respectifs (12) ;
- le fait de transmettre, au moyen de ladite pluralité d'éléments de transmission (19), ledit code d'habilitation au système (10) de serveur informatique ;
le procédé étant **caractérisé en ce qu'**il comprend
- l'habilitation sélective, en fonction au moins dudit code d'habilitation, d'au moins un desdits dispositifs de télécommunication électroniques portables (12) pour accéder à des contenus multimédia préenregistrés mis à disposition par ledit système (10) de serveur informatique, la reproduction étant effectuée en fonction des signaux d'instructions,
lesdits signaux d'instructions de transmission comprenant le fait de transmettre le nom d'un utilisateur qui possède le dispositif de télécommunication électronique portable (12), la manière dont le dispositif de télécommunication électronique portable (12) est déplacé par l'utilisateur et la requête d'un contenu multimédia prédéfini.

10. Procédé selon la revendication 9, **caractérisé en ce qu'**il comprend la détection desdits signaux d'instruction relatifs aux modes de déplacement desdits dispositifs de télécommunication électroniques portables (12) dus à l'action des utilisateurs eux-mêmes, et la transmission desdits signaux d'instruction au moyen des éléments de transmission (19) respectifs audit système (10) de serveur informatique.

11. Procédé selon la revendication 9 ou la revendication 10, **caractérisé en ce que**, pendant ladite reproduction, il est prévu de moduler la reproduction desdits contenus multimédia afin de faire varier les modes de reproduction.

12. Procédé selon la revendication 11, **caractérisé en ce que** la modulation de la reproduction desdits contenus multimédia est déterminée en fonction des signaux d'instruction relatifs aux modes de déplacement desdits dispositifs de télécommunication électroniques portables (12).

13. Procédé selon l'une quelconque des revendications 9 à 12, **caractérisé en ce qu'**après que ledit code d'habilitation a été lu et acquis, au moins l'un des dispositifs de télécommunication électroniques portables (12) remplissant la fonction de système (10) de serveur informatique, établissant un réseau de communication en étoile avec tous les autres dispositifs de télécommunication électroniques portables (12).

14. Procédé selon l'une quelconque des revendications 9 à 13, **caractérisé en ce qu'**il prévoit la réception dans lesdits dispositifs électroniques de télécommunication portables (12) d'informations par ledit système (10) de serveur informatique, lesdites informations comprenant les types de contenus multimédia disponibles, le nombre d'utilisateurs connectés audit système (10) de serveur informatique, le nom des utilisateurs connectés audit système (10) de serveur informatique, le nom d'un utilisateur spécifique.
